# EUROPEAN PATENT APPLICATION

(11) **EP 4 378 670 A1**
(43) Date of publication of application: **05.06.2024**
(21) Application number: 22210802.9
(22) Date of filing: 01.12.2022
(51) Int. Cl.: B29C 70/22, B29C 70/54, B32B 5/06, B32B 5/26, B32B 7/09, B32B 27/38, D03D 15/283, D03D 15/587, F01D 5/28, F04D 29/32, B29B 17/00, F03D 1/06, D04B 21/16, B29L 31/08

(54) **FABRIC WITH A YARN WITH AT LEAST ONE EPOXY-COMPATIBLE GROUP AND/OR A GROUP REACTIVE TOWARDS EPOXY, AND MANUFACTURE METHOD**

(71) Applicant: Siemens Gamesa Renewable Energy A/S, 7330 Brande (DK)
(72) Inventor: Ischtschuk, Lars, 9200 Aalborg (DK); Netzel, Christian, 28217 Bremen (DE)
(74) Representative: SGRE-Association

(57) **Abstract**

Fabric (20) comprising:
i) a first fiber layer (21, 22, 23, 24) and a second fiber layer (21, 22, 23, 24), wherein the first fiber layer (21, 22, 23, 24) and the second fiber layer (21, 22, 23, 24) are laid on top of each other; and
ii) a yarn (25), wherein the yarn (25) extends through the first fiber layer (21, 22, 23, 24) and the second fiber layer (21, 22, 23, 24) and thereby fixates the first fiber layer (21, 22, 23, 24) to the second fiber layer (21, 22, 23, 24). The yarn (25) is made of or comprises a synthetic material, in particular a thermoplastic material, having at least one epoxy-compatible group and/or a group reactive towards epoxy.

## Description

### Field of invention

The present invention relates to a fabric with a first layer, a second layer, and a yarn as well as to a composite element comprising such fabric. Furthermore, the invention relates to a wind turbine comprising at least one composite element with such fabric. Also, the invention relates to a fabrication method for a fabric.

Thus, the present invention may relate to the technical field of manufacturing a composite element comprising a fabric, in particular for a wind turbine.

### Art Background

Composite elements, in particular wind turbine blades, are reinforced with glass and carbon non-crimped fabrics (or NCF). Such fabrics are produced by laying different fiber layers on each other and by subsequently fixating them with a yarn extending through the layers.

In the known art, the yarns used for fixating the fiber layers are fabricated by using mainly polyester. Such yarns may have the drawback, that they are made of a thermoplastic having no compatibility to thermoset resins used for producing the composite elements. This incompatibility may lead to material failure such as microcracks, which may then cause an accelerated fatigue of the composite element. This may in particular be the case when the composite element undergoes cyclic stresses, for example a composite element of a wind turbine blade.

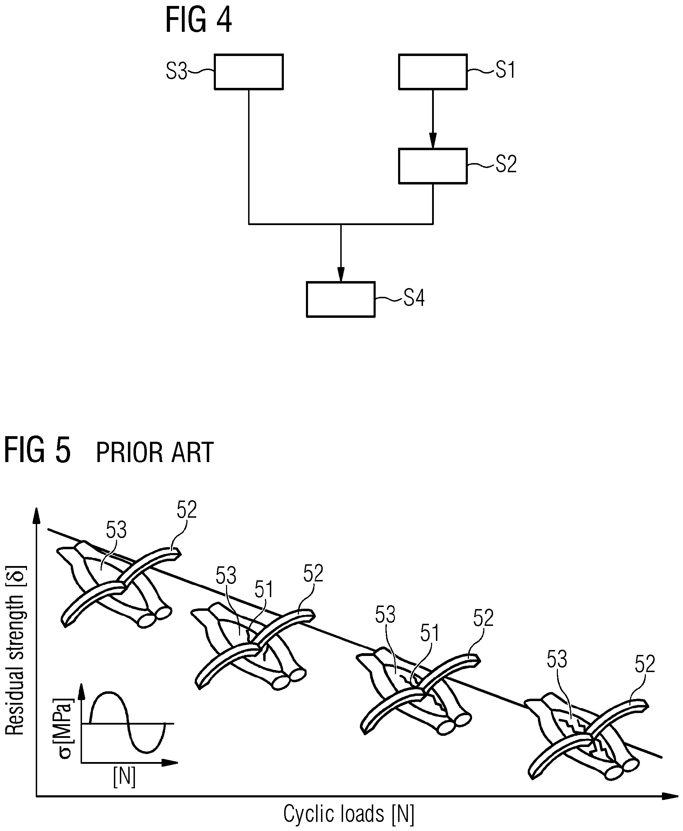

This effect of material failure is demonstrated in Figure 5 for a conventional composite element. At the beginning of the cyclic loads, micro cracks 51 arise at the interface between the non-crimped fabric and the thermosetting material 53 around the sewing yarn filament 52. By continuous cyclic loading, the microcracks 51 increase in number and in dimension, thus leading to a fatigue failure of the material (less residual strength with increasing number oy cycles).

### Summary of the invention

There may be a need for fabricating a composite element, in particular for a wind turbine, in an efficient and robust manner.

A fabric, a composite element, a wind turbine, and a manufacture method are described.

According to a first aspect of the present invention, there is described a fabric comprising a first fiber layer and a second fiber layer, wherein the first fiber layer and the second fiber layer are laid on top of each other.

The fabric according to the first aspect further comprises a yarn, wherein the yarn extends through the first fiber layer and the second fiber layer and thereby fixates the first fiber layer to the second fiber layer. The yarn is made of or comprises a synthetic material, in particular a plastic material such as a thermoplastic material, having at least one epoxy-compatible group and/or a group reactive towards epoxy.

According to a second aspect of the present invention, there is described a composite element, in particular a wind turbine blade, comprising at least one fabric, in particular according to the first aspect of the present invention.

According to a third aspect of the present invention, there is described a wind turbine with at least one composite element, in particular according to the second aspect of the present invention.

According to a fourth aspect of the present invention, a method for fabricating a fabric is provided. The method comprises the following steps:
i) placing a first fiber layer on top of a second fiber layer,
ii) providing a yarn, and
iii) stitching the yarn through the first fiber layer and the second fiber layer and thereby fixating the first fiber layer and the second fiber layer with the at least one yarn,
iv) wherein the yarn is made of or comprises a synthetic material, in particular a thermoplastic material, having at least one epoxy-compatible group and/or a group reactive towards epoxy.

According to a fifth aspect of the present invention, there is described a use (method of using) a turbine blade made of a material that comprises at least one epoxy-compatible group and/or a group reactive towards epoxy as a starting material to manufacture a yarn that comprises the at least one epoxy-compatible group and/or a group reactive towards epoxy.

According to a sixth aspect of the present invention, there is described a use (method of using) a yarn, that comprises or consists of a (thermoplastic) material that has at least one epoxy-compatible group and/or a group reactive towards epoxy, to fixate fiber layers, that respectively comprise or consist of a further (thermoplastic) material having at least one further epoxy-compatible group and/or a group reactive towards epoxy.

According to a further aspect of the invention, there is described a yarn for fixating fiber layers of a fabric, wherein the yarn comprises or consists of a synthetic material that comprises at least one epoxy-compatible group and/or a group reactive towards epoxy, in particular wherein the yarn is (at least partially) made of recycled wind turbine blade materials.

In the context of the present application, "epoxy-compatible group" means a chemical group being which is not reacting with epoxy but which assimilates within the epoxy matrix.

On the other hand, a "group reactive towards epoxy" means that the group has a chemical reaction with epoxy resins, thus allowing a chemical bonding to take place.

In the context of the present document, the term "fabric", may refer to a fabric comprising different fiber layers of different or equal materials laid on top of each other.

The fabric may be, for example, a non-crimped fabric. In non-crimped fabrics, the fibers of the different layers are not interwoven to each other, but the layers are rather placed on top of each other and then stitched together by using a sewing yarn.

Non-crimped fabrics are known in the art as being suitable for absorbing cyclic loads without undulation due to the alignment of the different layers of the non-crimped fabric.

Other kinds of fabrics, such as a web, veils, fiber stacks and semi-finished textiles, are also a fabric according to the present invention.

The fabric might be unidirectional, when all of the fiber layers are aligned in such a way that the fibers of the different layers are parallel in one direction to each other.

The fabric might also be multidirectional, meaning that the different layers, and thus their respective fibers, are aligned along different main directions of extensions.

For example, the fabric might also be bidirectional, meaning that the fiber layers are aligned in such a way that the fibers of the different fiber layers have two main directions of extension, wherein it is preferably provided that the two directions are orthogonal to each other.

According to another example, a triaxial fabric with three main directions of extensions might be provided, preferably having relative angles to each other of -45°, 0° and 45°.

According to yet a further example, a quadriaxial fabric might be provided, having preferably relative angles between the main direction of extensions of -90°, -45°, 0°, 45° and 90°.

In the context of the present document, the term "yarn" may refer in particular to a thread, which can be either a monofilament or a multifilament, which is being used for fixating the different fiber layers to each other. Preferably, the yarn is made of or comprises a thermoplastic material, so that procedures well known in the prior art can be used together with the described yarn. Preferably, the yarn comprises a synthetic material, such as a (thermo-) plastic material. In an example, the direction of main extension of the yarn in the fabric is (essentially) perpendicular to the direction(s) of main extension of the fibers of the fiber layers.

According to an exemplary embodiment, the invention may be based on the idea that a fabric may be provided in an efficient and robust manner, when fiber layers of the fabric are fixed together using a yarn having at least one epoxy-compatible group and/or a group reactive towards epoxy.

Such a fabric may have a significantly improved compatibility between the yarn, the fiber layers, and a mold material (e.g., thermosetting materials, in particular epoxy resins) used for fabricating composite elements, in particular wind turbine blades.

It has been surprisingly found by the inventors that an excellent compatibility may be achieved, when the yarn comprises at least one epoxy group.

By including at least one epoxy-compatible group and/or a group reactive towards epoxy within the yarn, the mold material, which is in general a resin that comprises itself epoxy groups and/or other groups with a high compatibility for epoxy-compatible groups and/or a group reactive towards epoxy, may have an improved binding to the fabric during the curing process of the mold resin. Thereby, the quality of the finished product and the manufacture process may be improved and is made more efficient.

In particular, the use of epoxy-compatible groups and/or a group reactive towards epoxy is useful to overcome the incompatibility being present between a yarn, which is preferably a thermoplastic material, and the resin, which is normally a thermosetting material. Conventionally, material differences and incompatibilities lead to material failure such as microcracks in the finished product, which may shorten the lifespan of the composite element itself.

Nevertheless, by using epoxy-compatible groups and/or a group reactive towards epoxy in the yarn, it may be possible to have a strong bonding between the fabric and the mold resin forming the composite element and to minimize the number of the micro-cracks at the boundary between the fabric and the resin.

Without wishing to be bound to a specific theory, it is presently assumed that the epoxy-compatible groups and/or a group reactive towards epoxy, during the curing process of the resin, promote the interaction at least in parts of the yarn, thus allowing the yarn to dissolve and/or react with the resin matrix.

With the present invention it is therefore possible to use a fabric showing a higher affinity with resins forming composite elements, in particular for wind turbines, thanks to the epoxy compatible and/or epoxy reactive group.

The resulting composite material may yield improved mechanical properties and a longer life span, when compared to composite elements known in the prior art.

In a preferred embodiment, a wind turbine blade or a part thereof is recycled to provide a starting material for producing the yarn. In particular, when the resin material of said wind turbine blades comprises epoxy-compatible groups and/or a group reactive towards epoxy, the yarn of the present invention may be produced directly in a cost-saving and environmentally friendly manner.

### Exemplary Embodiments

In accordance with an embodiment of the invention, the thermoplastic material is made of a recycle ketal or acetal-based resins.

According to an embodiment of the invention, the yarn is a monofilament yarn. A monofilament yarn is a yarn having only one thread of material, thus making the simplifying the fabrication process.

A monofilament yarn could have a thickness preferably comprised between 10 µm and 400 µm.

Alternatively, the yarn might be a multifilament yarn. A multifilament yarn comprises at least two, preferably three or more, threads being braided, or intertwined, together to form the yarn. A multifilament yarn is advantageous over a monofilament yarn as it provides improved properties, such as high elongation, plasticity, permeability etc.

Preferably, each thread of the multifilament yarn has a thickness between 1 µm and 400 µm, more preferably between 10 µm and 40 µm. For such reason, a multifilament yarn is thinner than a monofilament yarn, thus making the multifilament yarn more suitable to be used in the fabrication of the fabric.

According to an embodiment of the invention, the first fiber layer and/or the second fiber layer comprises or is made of at least one of glass fibers, carbon, basalt fibers, natural fibers or synthetic fibers.

Such fibers are commonly used in the fabrication process of composite elements, thus allowing the use of well-known fibers and material in the production of the composite elements according to the invention.

As already explained above, the fabric might be multiaxial, in particular bidirectional, triaxial or quadriaxial.

In particular, the fabric is bidirectional, and the fiber layers are laid at an angle with respect to each other, in particular wherein said angle is between 0° and 90°.

Also, the fabric might be triaxial and the fiber layers are laid at angles with respect to each other being particularly comprised between -45° and 45°.

Also, the fabric might be quadriaxial and the fiber layers are laid at angles with respect to each other being particularly comprised between -90° and 90°.

According to an embodiment of the invention, the yarn is stitched through the first fiber layer and the second fiber layer with a stich being at least one of a warp stich, a trickot stich, and a trickot-warp stich.

A warp stich is defined as a stitch following a straight row, or course, when fixating the different fiber layers together.

A trickot stitch is defined as a stitch following a zig-zag course when fixating different fiber layers together. In other words, a trickot stich comprises a first step along a first direction and a second step along a second direction being different from the first direction, in particular being orthogonal with respect to the first direction.

A trickot-warp stich is defined as a stich having a first straight step, a first diagonal step along a first diagonal direction, a second straight step along the same direction of the first straight step and a second diagonal step along a direction comprised between the direction of the first and the second straight step and the first diagonal direction. The second diagonal direction is preferably orthogonal with respect to the first diagonal direction.

A trickot stich, in particular a trickot-warp stich, is advantageous for giving more stiffness and stability to the fabric.

According to a further embodiment, the synthetic material, in particular thermoplastic material, of the yarn is made of or comprises a recycled material with at least one epoxy-compatible group and/or a group reactive towards epoxy, in particular wherein the yarn is (at least partially) made of recycled wind turbine blade materials.

In such a way it is possible to recycle used, or spent, material from composite elements, in particular from wind turbine blades, thus providing an environmentally friendly and material saving method for fabricating the yarn.

According to an embodiment, it is therefore possible to fabricate the yarn from a used wind turbine blade and its materials, which is preferably made of a thermosetting material, in particular resin, having already epoxy-compatible groups and/or a group reactive towards epoxy in it.

Therefore, according to an embodiment, providing the yarn further comprises recycling a material, in particular a material from a turbine blade, that comprises at least one epoxy-compatible group and/or a group reactive towards epoxy to manufacture the yarn.

According to a further embodiment, a method for fabricating a yarn using material from a recycled composite element, in particular a wind turbine blade, is described.

According to a further embodiment, the composite element further comprises: a thermosetting material, in particular a resin (a thermosetting resin) that at least partially encapsulates (in particular fully embeds) the fabric. Preferably, the resin comprises at least one epoxy-compatible group and/or a group reactive towards epoxy and/or (comprises at least one compatible group and/or a group reactive towards epoxy that) is compatible with at least one epoxy-compatible group and/or a group reactive towards epoxy.

According to a further embodiment, there is described a method of manufacturing a composite element, the method comprises: at least partially encapsulating the fabric (as described above) in a mold material, in particular a thermosetting material/resin. This may provide the advantage that a high compatibility between the epoxy-compatible groups and/or a groups reactive towards epoxy of the yarn (, the fabric), and the mold material may be achieved.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

- Figure 1: schematically shows a wind turbine according to an exemplary embodiment of the invention.
- Figure 2: shows a fabric according to an exemplary embodiment of the present invention.
- Figures 3a, 3b, 3c: show a simplified depiction of a warp stich, a trickot stitch and a trickot-warp stitch according to an exemplary embodiment of the present invention.
- Figures 4: shows a simplified diagram for fabricating a fabric according to an exemplary embodiment of the present invention.
- Figure 5: shows a diagram with the effects of using a yarn according to the prior art in a fabric in a composite element.

### Detailed Description of the Drawings

The illustration in the drawing is schematic. It is noted that in different figures, similar or identical elements or features are provided with the same reference signs or with reference signs, which are different from the corresponding reference signs only within the first digit. In order to avoid unnecessary repetitions elements or features which have already been elucidated with respect to a previously described embodiment are not elucidated again at a later position of the description.

Further, spatially relative terms, such as "front" and "back", "above" and "below", "left" and "right", et cetera are used to describe an element's relationship to another element(s) as illustrated in the figures. Thus, the spatially relative terms may apply to orientations in use which differ from the orientation depicted in the figures. Obviously, all such spatially relative terms refer to the orientation shown in the figures only for ease of description and are not necessarily limiting as an apparatus according to an embodiment of the invention can assume orientations different than those illustrated in the figures when in use.

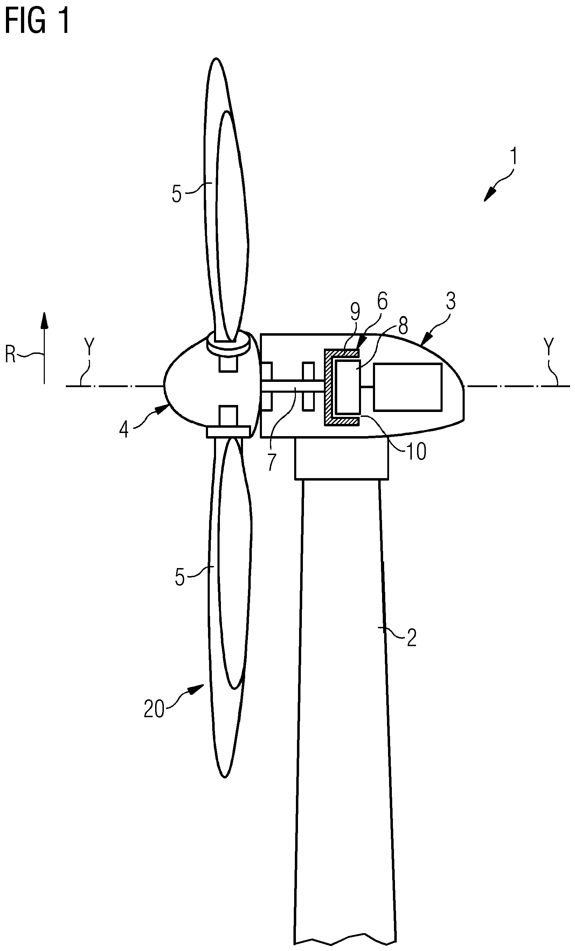

**Figure 1** shows a wind turbine 1. The wind turbine 1 comprises a tower 2, which is mounted on a non-depicted fundament. A nacelle 3 is arranged on top of the tower 2. The wind turbine 1 further comprises a wind rotor 4 having two, three or more blades 5 (in the perspective of **Figure 1** only two blades 5 are visible). The wind rotor 4 is rotatable around a longitudinal rotation axis Y, which is coincident with an axial direction, also referred to as Y. When not differently specified, the terms axial, radial and circumferential in the following are made with reference to the longitudinal axis Y. The blades 5 extend radially in a radial direction R with respect to the rotational axis Y. The wind turbine 1 comprises a permanent magnet electric generator 6. According to other possible embodiments of the present invention (not represented in the attached figures), the present invention may be applied to other types of electric machine design, e.g. induction, synchronous, etc. The wind rotor 4 is rotationally coupled with the permanent magnet generator 6 by means of a rotatable main shaft 7. The rotatable main shaft 7 extends along the rotational axis Y. The wind rotor 4 may also be rotationally coupled directly with the permanent magnet generator 6 (direct-drive generator configuration). The permanent magnet electric generator 6 includes a stator 8 and a rotor 9. The rotor 9 is rotatable with respect to the stator 8 about the rotation axis Y. The rotor 9 is radially external with respect the stator 8 and rotatable about the rotational axis Y. The present invention may however also include not-shown embodiments in which the rotor 9 is radially internal with respect to the stator 8. A circumferential air gap 10 is provided between the stator 8 and the rotor 9.

The three or more blades 5 comprise each a composite element with a fabric 20. The manufacture of said composite element is described in detail in the following.

As explained above, the fabric might be a non-crimped fabric, a web, veils, fiber stacks and semi-finished textiles. Other kinds of fabrics might also be included within the scope of the present invention.

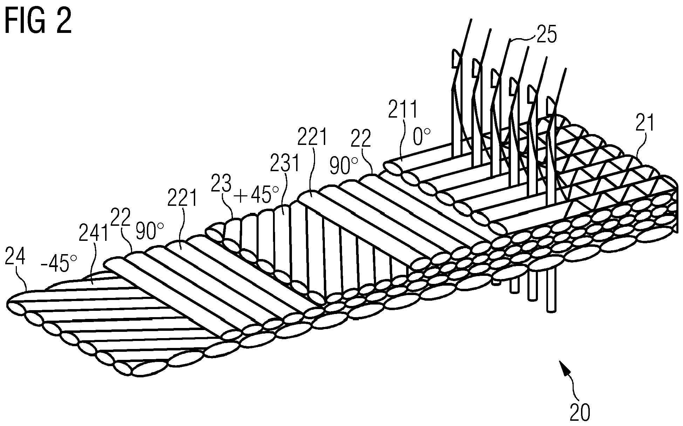

**Figure 2** shows a fabric 20 according to an embodiment of the present invention. The fabric 20 comprises from top to bottom a first fiber layer 21, a second fiber layer 22, a third fiber layer 23, a further second fiber layer 22, and a fiber layer 24, as well as yarns 25.

The first fiber layer 21 comprises fibers 211 having a first direction of extension. The second fiber layers 22 comprise fibers 221 having a second direction of extension. The third fiber layer 23 comprises fibers 231 having a third direction of extension. The fourth fiber layer 24 comprises fibers 241 having a fourth direction of extension.

The first direction of extension has a relative angle of 0°. The second direction of extension has an angle of 90° relative to the first direction of extension. The third direction of extension has an angle of 45° relative to the first direction of extension and the fourth direction of extension has an angle of -45° relative to the first direction of extension.

The fabric 20 according to **Figure 2** has therefore five fiber layers and is quadriaxial.

The fibers 211, 221, 231, 241 forming the layers 21, 22, 23, 24 might be carbon fibers, glass fibers, natural fibers or synthetic fibers. The layers 21, 22, 23, 24 might be of the same material or of different materials.

The layers 21, 22, 23, 24 are disposed one on top of the other, however without being woven with one another, thus providing the basis for the fabric 20.

The yarns 25 extend through the first, the second, the third, and the fourth layer 21, 22, 23, 24 and thereby fixate them, thus providing the fabric according to an embodiment of the present invention.

The yarns 25 might be realized as monofilament or multifilament yarns.

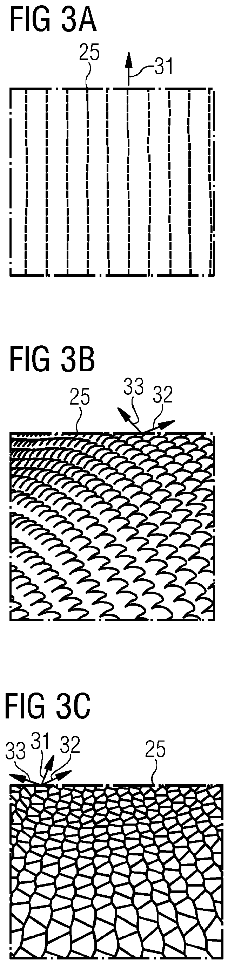

**Figures 3a, 3b, 3c** show a simplified depiction of a warp stich, a trickot stitch and a trickot-warp stitch according to an exemplary embodiment of the present invention.

In **Figure 3a****,** a warp stich is shown. Here the yarns 25 follow a straight row, or course, along a first stitching direction 31 when fixating the different fiber layers together.

In **Figure 3b****,** a trickot stitch is shown. Here the yarns 25 follow a zig-zag course when fixating different fiber layers 21, 22, 23, 24 together. In other words, the yarns 25 are i) passed through the fiber layers 21, 22, 23, 24 a first time in a first step along a first diagonal stitching direction 32 and then, ii) the yarns 25 are passed through the fiber layers 21, 22, 23, 24 a second time in a second step along a second diagonal direction 33 being different from the first stitching direction 32. In **Figure 3b****,** the second diagonal stitching direction 33 is orthogonal to the first diagonal stitching direction 32.

In **Figure 3c****,** a trickot-warp stich is shown. Here the yarns 25 pass through the fiber layers 21, 22, 23, 24 a first time along the first stitching direction 31. In a second step, the yarns 25 are passed through the fiber layers 21, 22, 23, 24 in a first diagonal step along the first diagonal stitching direction 32. In a third step, the yarns 25 are passed through the layers 21, 22, 23, 24 in a second straight step along the first stitching direction 31. In a fourth and final step, the yarns 25 are passed through the fiber layers 21, 22, 23, 24 in a second diagonal step along the second diagonal stitching direction 33.

In **Figure 4****,** a simplified diagram for fabricating a fabric 20 according to an exemplary embodiment of the present invention is shown. Reference signs can refer to the Figures described above.

In a first step S1, the fiber layers 21, 22, 23, 24 are provided.

In a second step S2, the fiber layers 21, 22, 23, 24 are stacked one on top of the other.

Parallel thereto, in a step S3, the yarn 25 is fabricated. The yarn 25 may be fabricated by using well known methods in the prior art, such as spinning a hot melt of the material forming the yarn 25.

The yarn 25 comprises at least one epoxy-compatible group and/or a group reactive towards epoxy, in order to make it compatible with the material of the composite element, such as the wind turbine blade 5.

Furthermore, the yarn 25 might be a monofilament or a multifilament yarn, meaning that it is formed by either one thread or multiple threads being braided or intertwined with each other.

Preferably, the yarn 25 is fabricated by starting from a used or spent wind turbine blade. In this case, the used or spent wind turbine blade can be recycled by providing the material for the yarn.

In a step S4, the yarn 25 is passed through the fiber layers 21, 22, 23, 24 and is stitched, preferably by means of a warp, a trickot or a trickot-warp stich, to fixate the fiber layers 21, 22, 23, 24 to each other.

## Claims

1. Fabric (20) comprising:
a first fiber layer (21) and a second fiber layer (22), wherein the first fiber layer (21) and the second fiber layer (22) are laid on top of each other; and
a yarn (25), wherein the yarn (25) extends through the first fiber layer (21) and the second fiber layer (22) and thereby fixates the first fiber layer (21) to the second fiber layer (22),
wherein the yarn (25) is made of or comprises a synthetic material, in particular a thermoplastic material, having at least one epoxy-compatible group and/or a group reactive towards epoxy.

2. Fabric (20) according to claim 1, wherein the thermoplastic material is made in particular of a recycled ketal or acetal-based resin.

3. Fabric (20) according to claim 1 or 2, wherein the yarn (25) is a monofilament yarn, in particular wherein the monofilament yarn has a thickness in between 10 µm and 400 µm.

4. Fabric (20) according to claim 1 or 2, wherein the yarn (25) is a multifilament yarn, in particular wherein the multifilament yarn has at least two filaments,
more in particular wherein each of the filaments has a thickness between 1 µm and 40 µm.

5. Fabric (20) according to any of claims 1 to 4, wherein the first fiber layer (21) and/or the second fiber layer (22) comprises or is made of at least one of glass fibers, carbon fibers, natural fibers or synthetic fibers.

6. Fabric (20) according to any of claims 1 to 5, wherein the fiber layers (21) are laid at an angle with respect to each other, in particular wherein said angle is between 0° and 90°.

7. Fabric (20) according to any of claims 1 to 6, wherein the yarn (25) is stitched through the first fiber layer (21) and the second fiber layer (22) with a stich being at least one of a warp stich, a trickot stich, and a trickot-warp stich.

8. Fabric (20) according to any of claims 1 to 7, wherein the synthetic material, in particular thermoplastic material, of the yarn (25) is made of or comprises a recycled material with at least one epoxy-compatible group and/or a group reactive towards epoxy, in particular a material from recycled wind turbine blade material (5).

9. Composite element, in particular a turbine blade (5) or a part thereof, comprising at least one fabric (20) according to one of the claims 1 to 8.

10. Composite element according to claim 9, further comprising: a resin that at least partially encapsulates the fabric (20),
in particular wherein the resin comprises at least one epoxy-compatible group and/or a group reactive towards epoxy and/or is compatible with at least one epoxy-compatible group and/or a group reactive towards epoxy.

11. Wind turbine (1) comprising at least one composite element according to claim 9 or 10.

12. Method for fabricating a fabric (20), the method comprising:
placing a first fiber layer (21) on top of a second fiber layer (22),
providing a yarn (25), and
stitching the yarn (25) through the first fiber layer (21) and the second fiber layer (22) and thereby fixating the first fiber layer (21) and the second fiber layer (22) with at least one yarn (25),
wherein the yarn (25) is made of or comprises a synthetic material, in particular a thermoplastic material, having at least one epoxy-compatible group and/or a group reactive towards epoxy.

13. Method according to claim 12, wherein providing the yarn (25) further comprises:
recycling a material, in particular a material from a turbine blade material (5), that comprises at least one epoxy-compatible group and/or a group reactive towards epoxy to manufacture the yarn (25).

14. Using a turbine blade (5) made of a material that comprises at least one epoxy-compatible group and/or a group reactive towards epoxy as a starting material to manufacture a yarn (25) that comprises the at least one epoxy-compatible group.

15. Using a yarn (25), that comprises or consists of a synthetic, in particular thermoplastic, material that has at least one epoxy-compatible group and/or a group reactive towards epoxy, to fixate fiber layers (21, 22, 23, 24), that respectively comprise or consist of a further synthetic, in particular thermoplastic, material having at least one further epoxy-compatible group and/or a group reactive towards epoxy.
